## Europäisches Patentamt
## European Patent Office
## Office européen des brevets

(11) Veröffentlichungsnummer: **0 145 027**
**A2**

(12) **EUROPÄISCHE PATENTANMELDUNG**

(21) Anmeldenummer: **84115705.0**

(22) Anmeldetag: **21.06.82**

(51) Int. Cl.⁴: **A 01 B 3/26**
**A 01 B 63/22**

(30) Priorität: **22.06.81 US 275572**

(43) Veröffentlichungstag der Anmeldung:
**19.06.85 Patentblatt 85/25**

(84) Benannte Vertragsstaaten:
**DE FR GB SE**

(60) Veröffentlichungsnummer der früheren
Anmeldung nach Art. 76 EPÜ: **0 068 381**

(71) Anmelder: **DEERE & COMPANY**
**1 John Deere Road**
**Moline Illinois 61265(US)**

(72) Erfinder: **Arnold, Loren Glenn**
**RFD No.2, Fort Jennings**
**Ohio 45844(US)**

(72) Erfinder: **Parker, Paul David**
**776 - 41st Avenue**
**East Moline Illinois 61244(US)**

(72) Erfinder: **Sullivan, James Franklin**
**346 - 32nd Avenue**
**East Moline Illinois 61244(US)**

(74) Vertreter: **Fricke, Joachim, Dr. et al,**
**Dr. R. Döring, Dr. J. Fricke, Patentanwälte**
**Josephspitalstrasse 7**
**D-8000 München 2(DE)**

(54) Von einem Ackerschlepper nachgeschleppter Pflug.

(57) Bei einem von einem Ackerschlepper nachgeschleppten Pflug ist ein hydraulischer Verstellmotor zur Verstellung der relativen Höhenlage zwischen einem Furchenlaufrad und dem zugehörigen Pflughauptrahmen sowie für die Zugverbindungseinrichtung zwischen dem Hauptrahmen und einem starren Anschlußglied des Ackerschleppers vorgesehen. Zusätzlich ist ein doppelwirkender hydraulischer Schubkolbenmotor vorgesehen, dessen Zylinder mit der Zugstange und dessen Kolbenstange mit der verstellbaren Zugvorrichtung verbunden ist. Beide Schubkolbenmotoren sind arbeitsmäßig in Reihe geschaltet. Wenigstens einer dieser Schubkolbenmotoren weist einen Gleichlaufsteueranschluß auf, derart, daß der zugehörige Kolben in Abhängigkeit von seiner Bewegung diesen Anschluß zunächst abdeckt und wieder freigibt. Ferner weist die Zugvorrichtung eine Rückführungseinrichtung auf, welche bei der Einfahrbewegung des Kolbens diesen bis zur Abdeckung dieses Gleichlaufsteueranschlusses im begrenzten Maße zurückfährt.

EP 0 145 027 A2

## Von einem Ackerschlepper nachgeschleppter Pflug

Die Erfindung betrifft einen von einem Ackerschlepper nachgeschleppten Pflug mit den Merkmalen des Oberbegriffs des Anspruchs 1. Ein solcher Pflug ist aus der US-PS 32 36 313 bekannt.

Der bekannte Pflug weist zur Verstellung des Furchenlaufrades ein Verstellgestänge auf, dem ein doppelt wirkender, hydraulischer Schubkolbenmotor zugeordnet ist. Das Gestänge wiederum ist mechanisch mit der in senkrechter Richtung verstellbaren Zugvorrichtung verbunden. Eine Betätigung des hydraulischen Schubkolbenmotors betätigt im wesentlichen gemeinsam das Gestänge des Furchenlaufrades ebenso wie die in senkrechter Richtung verstallbare Zugvorrichtung, so daß der Hauptrahmen des Pfluges während der Anhebe- und Absenkbewegungen im wesentlichen die gleiche horizontale Raumlage beibehält. Während des Absenkens des Hauptrahmens von einer ausgehobenen Transportstellung des Pfluges in eine Anpflügstellung, in der sich das Furchenlaufrad noch nicht in einer Furche befindet, ist es bei diesem bekannten Pflug möglich, den Hauptrahmen um ein größeres Maß gegenüber dem Furchenlaufrad abzusenken, als dies für die normale Pflugstellung notwendig ist, in der sich das Furchenlaufrad im Grunde einer Furche befindet. Voraussetzung hierfür ist es jedoch, daß der hydraulische Schubkolbenmotor in zwei unterschiedlichen Weisen gesteuert werden kann, nämlich einmal mit einer vorbestimmten Hublänge zum Erreichen der Anpflügstellung und zum Anderen mit einer davon unterschiedlichen Hublänge zum Absenken in die normale Arbeitsstellung.

Es ist ferner ein von einem Ackerschlepper nachgezogener Pflug aus der US-PS 37 31 749 bekannt, bei dem jedem der zwei vorderen und einem rückwärtigen Laufrad ein hydraulischer Schubkolbenmotor zum Verändern des relativen Höhenabstandes zwischen den Laufrädern und dem Hauptrahmen zugeordnet ist. Die drei Schubkolbenmotoren sind so in Reihe geschaltet, daß jeweils einer von ihnen direkt von der Druckmittelquelle aus gespeist wird, während das von ihm verdrängte Öl als Drucköl dem nachfolgenden Zylinder zugeführt wird und so fort. Dem kolbenstangenseitigen Ende jedes Zylinders ist außerdem eine Umgehungsleitung zugeordnet, die dann, wenn die Kolbenstange voll ausgefahren ist, beide Seiten des Kolbens mit der gleichen Leitung verbindet. Hierdurch werden Leckverluste im hydraulischen Kreis ausgeglichen. Nur eines der beiden vorderen Laufräder ist als Furchenlaufrad ausgebildet. Diesem ist eine Verstelleinrichtung zugeordnet, welche es ermöglicht, den Zylinder des zugehörigen Schubkolbenmotors an zwei verschiedenen Stellen an dem Hauptrahmen anzulenken. In der einen Stellung wird das Furchenlaufrad bei Betätigung des Schubkolbenmotors in eine Anpflügstellung bewegt, während in der zweiten Stellung durch die gleiche Bewegung des Schubkolbenmotors das Furchenlaufrad so relativ gegenüber dem Hauptrahmen verschwenkt wird, daß die Arbeitstiefe des Pfluges bei in der Furche befindlichem Laufrad erreicht wird. Die Verstellung des Einstellgliedes muß mittels Hand vorgenommen werden. Die Raumlage des Hauptrahmens wird bei den Hub- und Senkbewegungen somit durch die drei Laufräder und die Reihenschaltung der zugehörigen drei Schubkolbenmotore gewährleistet.

Es ist Aufgabe der Erfindung einen von einem Ackerschlepper nachgezogenen Pflug mit den Merkmalen des Oberbegriffs des Anspruchs 1 so weiterzubilden, daß die Lagesteuerung des Hauptrahmens während der Absenk- und Anhebebewegungen auf wesentlich einfachere und dennoch genaue Weise zuverlässig gesteuert werden kann.

Diese Aufgabe wird durch die Merkmale des Anspruchs 1 gelöst.

Im Unterschied zu dem gattungsgemäßen Pflug nach der US-PS 32 36 313 ist ein doppelt wirkender hydraulischer Schubkolbenmotor auch der verstellbaren Zugborrichtung zugeordnet. Beide Schubkolbenmotore sind in an sich bekannter Weise in Reihe geschaltet. Dabei ist jedoch wenigstens dem Schubkolbenmotor, der der verstellbaren Zugvorrichtung zugeordnet ist, ein Gleichlaufsteueranschluß zugeordnet, der in einer neuartigen Weise selbsttätig stellungsabhängig gesteuert wird, so daß eine exakte gleichphasige Bewegung des Furchenlaufrades und der verstellbaren Zugvorrichtung gewährleistet wird.

Es ist für beide Bewegungen, nämlich für das Furchenlaufrad und für die Zugvorrichtung ein absolut gleicher Takt gewährleistet, und zwar in beiden Hubrichtungen.

Die Unteransprüche 2 bis 7 betreffen vorteilhafte Einzelheiten der mechanischen Mittel, welche den Gleichlaufsteueranschluß bewegungsabhängig steuern. Diese mechanischen Mittel sind ebenso wie die Rückführungseinrichtung außerhalb des zugehörigen Schubkolbenmotors angeordnet.

Die Erfindung wird nachfolgend anhand schematischer Zeichnungen an einem Ausführungsbeispiel näher erläutert.

Es zeigen:

Figur 1 eine Draufsicht auf einen Pflug gemäß der Erfindung.

Figur 2 im Ausschnitt und im größeren Maßstabe in Draufsicht die Zugverbindungseinrichtung.

Figur 3 die Anordnung nach Fig. 2 in Seitenansicht.

Figur 4 eine Seitenansicht ähnlich der Fig. 3, jedoch in größerem Maßstabe der Zugverbindungseinrichtung in einer Stellung.

Figur 5 in gleicher Darstellung wie Fig. 4 die Zugverbindungseinrichtung in einer zweiten Stellung.

Figur 6 in größerem Maßstabe einen Teilschnitt durch denStellmotor der Zugverbindungseinrichtung.

Figur 7 eine Draufsicht entlang der Blickrichtung 7A-7A der Fig. 6.

Figur 8 eine schematische hydraulische Schaltung für den hydraulischen Speisekreis der beiden hydraulischen Motore.

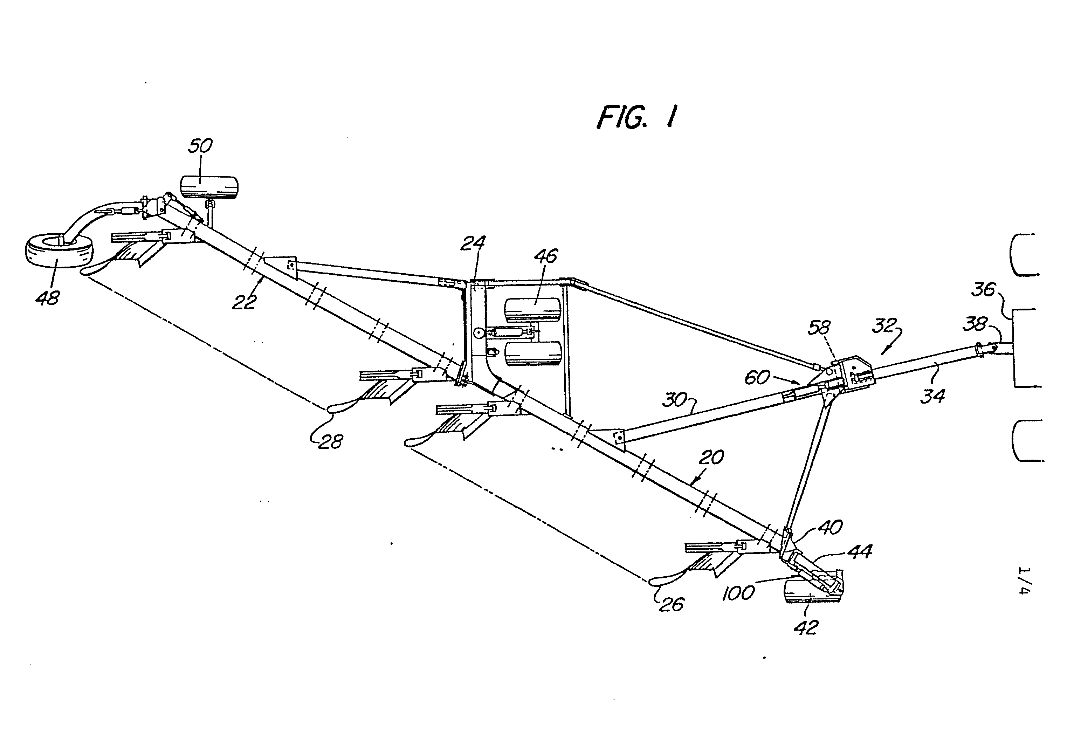

Aus Fig. 1 ist ein Tandempflug mit einem vorderen Hauptrahmen und einem gegenüber diesem zurückliegenden Hauptrahmen 22 ersichtlich, die um eine im wesentlichen quer verlaufende Achse im Bereich 24 gelenkig miteinander verbunden und in ihrer Lage schräg zur Fahrtrichtung geneigt sind.

Der vordere Hauptrahmen 20 weist eine Reihe von typischen Pflugkörpern 26 auf, von denen einige zur Vereinfachung der Darstellung weggelassen sind. Das gleiche gilt für die Pflugkörper 28 des hinteren Hauptrahmens 22. Der vordere Hauptrahmen 20 ist starr mit einer sich nach vorne erstreckenden Zugstange 30 verbunden, wobei die starre Verbindung zumindest bezüglich relativer vertikaler Bewegungen vorliegenh soll. Die Zugstange wir an ihrem vorderen Ende von einer Zugverbindungseinrichtung 32 unterstützt, die ein starres Verbindungsglied 34 umfaßt, welches mit dem Anschluß glied 38 des Ackerschleppers 36 verbunden und von diesem Unterstützt ist. Da der Hauptrahmen 20 gegenüber der Fahrtrichtung geneigt ist, liegt das vordere rechte Ende 40 rechts und vor dem linken vorderen Ende, welches durch die Zugstange repräsentiert wird. Das vordere rechte Ende des Hauptrahmens 20 wird durch ein Furchenlaufrad 42 abgestützt, und zwar über ein Stützgestänge 44. Das zurückliegende Ende des Hauptrahmens 20 ebenso wie das vordere Ende des rückwärtigen Hauptrahmens 22 werden durch ein mit Rädern versehenes Drehgestell 46 am Boden abgestützt, während das rückwärtige Ende des rückwärtigen Rahmens typischerweise von einem weiteren Furchenlaufrad 48 und einem Fühlrad 50 unterstützt ist.

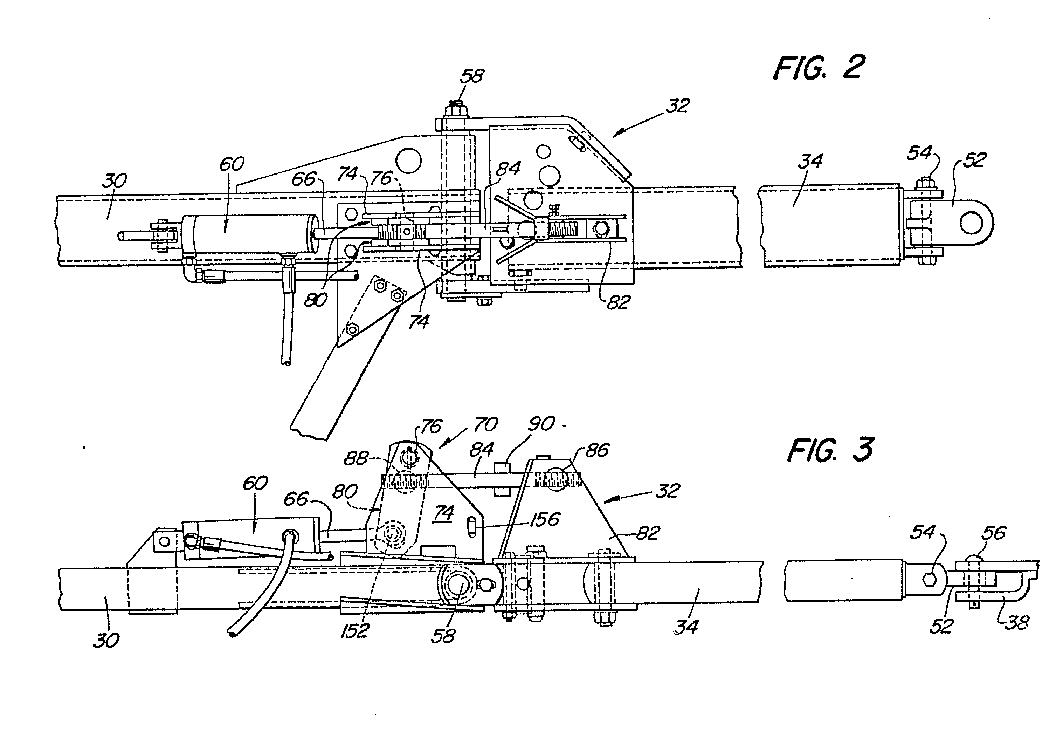

Aus den Fig. 2 und 3 geht hervor, daß das vordere Ende des starren Gliedes 34 der Zugverbindung 32 an der Zuglasche 52 des Ackerschleppers abgestützt ist, und zwar mit Hilfe eines senkrechten Schwenkzapfens 56 und eines quer verlaufenden Schwenkzapfens 54. Die Zugstange 30 und das starre Glied 34 sind um eine Querachse 58 gelenkig miteinander verbunden. Das vordere linke Ende des Hauptrahmens 20 wird angehoben oder abgesenkt vermittels der Gelenkverbindung 58, wenn das starre Glied 34 und die Zugstange 30 nach oben oder unten ausgebuckelt werden. Dies gibt der Zugverbindungseinrichtung die charakteristische Eigenschaft, daß sie in senkrechter Richtung verstellt werden kann. Zum Heben und Senken um die Schwenkachse 58 dient eine kraftausübende Einrichtung in Form eines doppelt wirkenden hydraulischen Motors, insb. eines Schubkolbenmotors 60. Es können aber auch andere geeignete Motoren eingesetzt werden. Der hier beispielsweise verwendete Motor läßt sich besonders leicht fernsteuern. Im vorliegenden Falle sind die Funktionen des hydraulischen Motors derart, daß die Zugverbindungseinrichtung 32 bei Ausfahren des Schubkolbenzylinders angehoben und beim Einziehen abgesenkt wird. Es ist ersichtlich, daß die Teile auch mit den zugehörigen Verbindungselementen in umgekehrter Weise verbunden sein können, so daß sich genau entgegengesetzte Zusammenhänge ergeben. Die nachfolgende Beschreibung dient also nur als Beispielsbeschreibung.

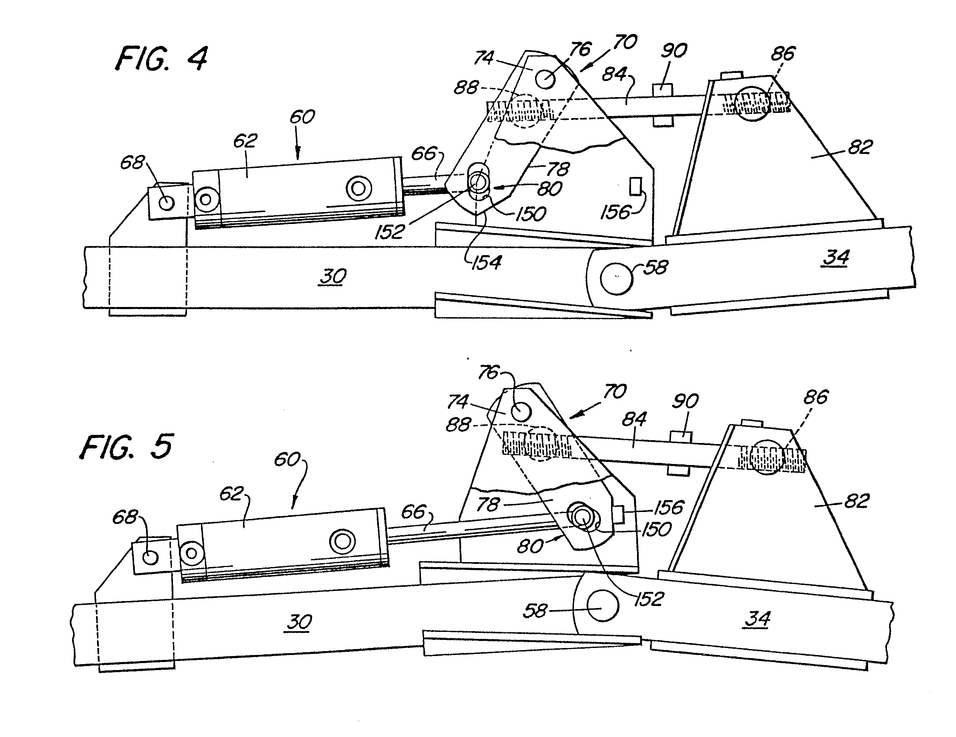

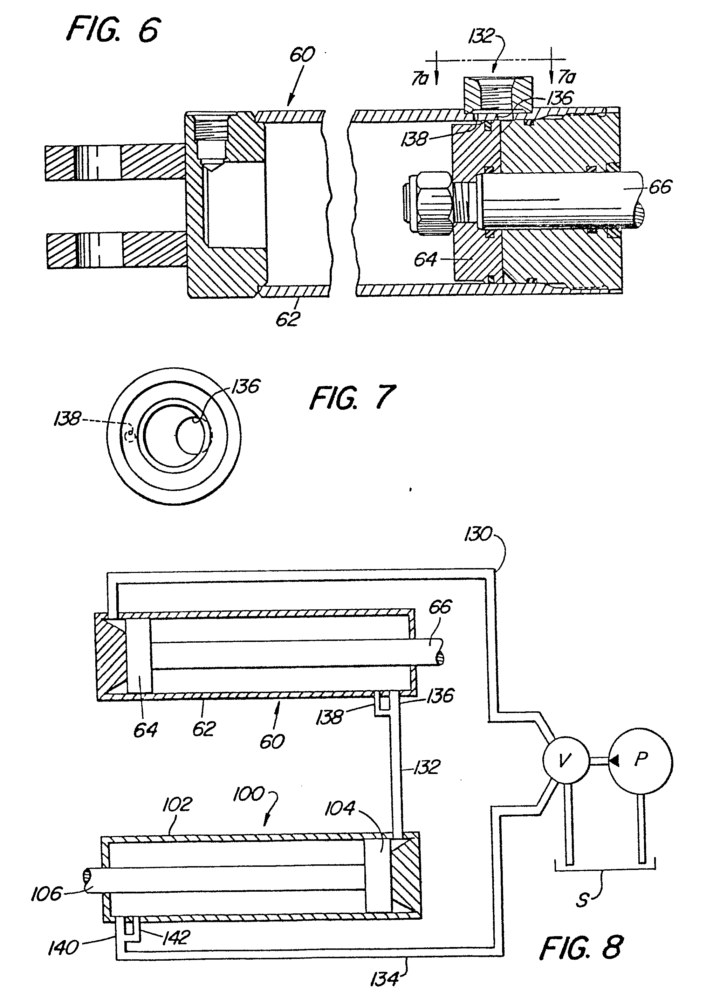

Der Motor 60 umfaßt einen Zylinder 62, einen Kolben 64 und eine Kolbenstange 66 (vergl. Fig. 6). Der Zylinder ist bei 68 an der Zugstange 30 hinter der Querachse 58 angelenkt, während die Kolbenstange sich nach vorne erstreckt und über eine Kraftübertragungseinrichtung 70 mit dem starren Glied 34 der Zugverbindung verbunden ist. Zu diesem Zweck trägt die Zugstange unmittelbar hinter dem horizontalen Schwenkzapfen 58 einen aufragenden Halter 74. Dieser kann unterschiedlich ausgebildet sein. Im vorliegenden Beispiel können zwei senkrechte Platten vorgesehen sein, zwischen denen ein Arm 78 frei um einen schwenkzapfen 76 nach vorne und nach hinten schwenken kann. Der Arm ragt von dem Zpafen 76 nach unten. Sein unteres Ende ist mit dem freien Ende der Kolbenstange 66 durch eine noch weiter unten zu beschreibende Verbindungeinrichtung 80 verbunden. Ein weiterer aufrecht stehender Halter 82 wird starr durch das starre Glied 34 in Fahrtrichtung vor der Schwenkachse 58 unterstützt. Dieser Halter ist mit einem mittleren Bereich zwischen den Enden des Armes 80 gelenkig verbunden, und zwar über einen Lenker 84. Der Lenker 84 ist über vordere und rückwärtige Gewindebereiche 86 und 88 jeweils mit dem vorderen Halter 82 bzw. dem mittleren Bereich des Armes 78,80 verbunden. Die hintere Verbindung 88 liegt unterhalb des Schwenkzapfens 76, wenn der hydraulische Motor 60 in der zuvor beschriebenen Weise ausgefahren und eingezogen wird. Die Gewindeverbindungen 86 und 88 ermöglichen die wirksame Länge zwischen dem Arm 78 und dem vorderen Halter mit Hilfe eines Abschnittes 90 zu verändern, der starr auf einem mittleren Bereich des Lenkers 84 vorgesehen ist. Das Ausfahren der Kolbenstange 66 schwingt den Arm 78nach vorne, um eine nach vorne gerichtete Kraft auf den vorderen Halter 82 auszuüben. Die Folge ist, daß die Zugstange und die Zugverbindungseinrichtung 32 im Bereich des Querzapfens 58 nach oben schwenkt. Das starre Glied 34 kann dabei um seinen Schwenkzapfen 54 gegenüber dem Ackerschlepper nach oben schwingen. Wenn dagegen der Motor 60 eingefahren wird, senkt sich die Zugstange 30 zusammen mit dem starren Glied 34 und der Gelenkverbindung 58 ab. Die Figuren 3 und 4 zeigenh die Teile in der abgesenkten Stellung. Figur 5 zeigt die Teile in der angehobenen Stellung. Die Beschreibung der hydraulischen Arbeitsweise des Motors 60 wird an dieser Stelle noch ausgesetzt.

Wie zuvor erwähnt, wird das rechte vordere Ende des Hauptrahmens 20 auf dem Furchenlaufrad 42 mit Hilfe des Stützgestänges 44 abgestützt.

Der hydraulische Motor 100 umfaßt einen Zylinder 102, einen Kolben 104 (Fig.8) und eine Kolbenstange 106. Die Anordnung ist so getroffen, daß der Motor 100 stets die gleiche Hublänge aufweisen kann, unabhängig davon, ob das Furchenlaufrad sich in der normalen Arbeitsstellung oder in der Anpflügstellung befindet. Im vorliegenden Beispiel wird der Motor 100 ausgefahren, um den Rahmen anzuheben und eingefahren, um ihn abzusenken. Auch hier können die Teilejedoch umgekehrt verbunden sein, so daß auch die umgekehrten Funktionen erreicht werden können.

Weiter oben ist auf das Merkmal hingewiesen,. wonach die beiden hydraulischen Motore in Reihe geschaltet sind. Diese Reihenschaltung umfaßt weiterhin eine Einrichtung, um den Gleichlauf der zugehörigen Kolben wieder herzustellen. Obwohl Fig. 1 eine hydraulische Steuereinrichtung auch für das Laufraddrehgestell, das hintere Furchenlaufrad und das Höhenfühlrad zeigt, sind diese

8

Merkmale nicht von besonderer Bedeutung und es wird von der Beschreibun Abstand genommen. Auch sind zur Vereinfachung und Deutlichkeit die Leitungen für die beiden Motore in fig. 1 nicht eingezeichnet.

Nachfolgend wird Bezug genommen auf die Figuren 6, 7 und 8, welche den grundlegenden hydraulischenh Schaltkreis zeigen.

Wie Fig. 8 zeigt, umfaßt der Ackerschlepper ein hydraulisches System mit einer Pumpe P, einem Steuerventil V und einem Sumpf S. In einer aktiven Stellund des Ventils führt eine Leitung 130 zu dem geschlossenen Ende des Motors 60 für die Zugverbindung. Eine Reihenschaltleitung 132 führt vom stangenseitigen Ende 60 zu dem gschlossenen Ende des Hydraulikmotors 100 für das Furchenlaufrad. Eine Rücklaufleitung geht vom stangenseitigen Ende des Motors für das Furchenlaufrad zurück zum Ventil und von dort zum Sumpf. In einer anderen aktiven Stellung des Ventils sind die beiden Leitungen für umgekehrte Bewegungen vertauscht. Das Ventil kann also selektiv so eingestellt werden, daß jeder Motor unter Druck gesetzt wird.

Damit die in Reihe geschalteten Motoren akkurat und wirksam arbeiten umfaßt das hydraulische System Mittel, um die Kolben in Gleichlauf zu bringen. Figur 6 zeigt eine repräsentative Einstelleinrichtung für das stangenseitige Ende des Motors für die Zugverbindung. Diese umfaßt einen Hauptanschluß 136 und einen Hilfsanschluß oder Gleichlaufsteuerungsanschluß 138. Es wird hierzu auch auf Fig. 7 verwiesen. Es wird angenommen, daß das geschlossene Ende des Motors unter Druck steht, wobei sich der Hauptanschluß stromabwärts von dem Hilfsanschluß befindet. Wenn der Kolben seine ausgefahrene Stellung erreicht deckt er den Hilfsanschluß 138 auf und gestattet eine weitere Unterdrucksetzung des geschlossenen Endes des Motors 100 für den Fall, daß der dortige Kolben sich nicht in Phase befindet. Der Rückwärtshub des dem Furchenlaufrad zugeordneten Motors führt zu einer vollständigen Einfahrstellung des der Zugverbindung zugeordneten Motors. Der Motor 100 weist ebenfalls einen Hauptanschluß 140 und einen Hilfsanschluß 142 auf.

Wie oben vermerkt und in Fig. 6 gezeigt, befindet sich der Kolben am Ende der ausgefahrenen Stellung. Wenn Druck an das kolbenseitige Ende des Motors für die Zugverbindung geleitet wird, so daß dieser einfährt, wird durch die Öffnung 138 eine Druckdifferenz auf die beiden Seiten des Kolbens 64 angelegt. Dadurch wird eine nach innen gerichtete Kraftr an dem Kolben 64 erzeugt, die kleiner ist.als die nach außen gerichtete Kraft an der Kolbenstange 66. Das Fluig kann durch die Hilfsöffnung entweichen und der Kolben 64 wird nicht zurückgezogen. das hierdurch auftretende Problem kann durch eine Einrichtung beseitigt werden, welche die Ausfahrkraft auf ds kolbenstangenseitige Ende 66 wegnimmt. Diese Einrichtung ist am Besten aus den Figuren 4 und 5 ersichtlich.

Es wurde früher schon Bezug genommen auf die Verbindungsvorrichtung 80, welche das Kolbenstangenende 66 und den Kraftübertragungsarm 78 miteinander verbindet. Teil dieser Kraftübertragungseinrichtung ist ein Schlitz 150 im unteren Bereich des Armes. Weiterhin gehört hierzu ein Querstift 152, der durch das freie Ende der Kolbenstange ragt und in dem Schlitz gleitet. Wie aus Fig. 4 hervorgeht, welche die angesenkte Stellung des Pfluges zeigt, verläuft der Schlitz dannb, wenn der Arm sich in der rückwärtigen Stellung befindet, im wesentlichen vertikal, d.h. im wesentlichen senkrecht zur allgemeinen Fahrtrichtung oder Bewegungsrichtung der Kolbenstange 66. Hierdurch wird jede Leerverbindung ausgeschlossen, wenn die Kolbenstange ausgefahren wird. Ein unterer vorderer Abschnitt des Armes weist einen abgewinkelten Bereich 154 auf, der nach dem Verschwenken des Armes nach vorne in die Stellung nach Fig. 5 an dem Anschlag 156 des Halters 76 angreift. Erst am Ende dieses Winkelbewgungsbereiches des Armes 78 erreicht der Motor der Zugverbindung das Ende seines Ausfahrhubes. Hier deckt der Kolben 64 den Hilfsanschluß 138 nach Fig. 6 auf, so daß das früher erwähnte Problem auftreten könnte. Bei diesem Problem kann der Kolben nicht mehr zurückgezogen werden, solange eine Ausfahrkraft auf das kolbenstangenseitige Ende 66 einwirkt. Wenn jedoch der Arm an dem Anschlag 156 angreift, läuft der Stift 152 frei bis in den Mittelbereich des Schlitzes (Fig. 6), welcher schräg nach oben und nach hinten geneigt ist. Dadurch wird jede Ausfahrkraft von dem Stift 152 und der Kolbenstange 66 weggenommen. Wenn also das Ventil V betätigt wird, um den Pflug abzusenken, führt der Differenzdruck, wie früher erläutert, dazu, daß der Kolben 64 einfährt. Der Stift 152 kann sich damit in dem Schlitz frei bewegen, so daß der Kolben 64 den Hilfsanschluß 138 abdeckt, so daß der Hauptanschluß 136 zu7r Frontseite des Kolbens 64 voll geöffnet ist. An dieser Stelle ist es wichtig zu ·bemerken, daß dann, wenn der Pflug sich in der voll angehobenen Stellung befindet, dessen Gewicht hauptsächlich von dem vorderen Furchenlaufrad, dem Drehgestell und den rückwärtigen Rädern aufgenommen wird. Das Gewicht wird normalerweise entlang der Linie der vorderen und rückwärtigen Träger konzentriert. Damit wird nahezu das gesamte Pfluggewicht von der Zugverbindungseinrichtung 32 abgenommen, d.h., daß die Zugverbindungseinrichtung nach oben ausbuckeln kann. Das umgekehrte ist bis zu einem gewissen Ausmaß der Fall, wenn gepflügt wird, d.h. wenn das Gewicht sich mehr auf die Verbindungseinrichtung verlagert.

Es ist ersichtlich, daß die Arbeitsweise der Motoren für die Zugverbindung und für das Furchenlaufrad im wesentlichen synchron erfolgt, mit dem Ergebnis, daß die vorderen Enden des Pfluges während des Anhebens und Absenkens ihre Raumlage beibehalten. Die Steuereinrichtung für das Furchenlaufrad, insb. in Verbindung mit dem bistabilen Arm, liefert die notwendige Kompensation bezüglich unterschiedlicher Funktionen beim Absenken in eine Arbeitsstellung, in der bereits eine Furche vorliegt und beim Absenken in die Arbeitsstellung, wenn das Furchenlaufrad auf der Oberseite des Ackers laufen muß, wie dies beim Anpflügen eines Feldes der Fall ist. In jedem Fall ist der Rückwärtshub des zugehörigen Motors für das Furchenlaufrad der gleiche, wodurch der Aufbau und die Betätigung des Ventils V wesentlich erleichtert werden.

Patentansprüche

1. Von einem Ackerschlepper nachgezogener Pflug mit einem geneigt zur Fahrtrichtung angeordneten Hauptrahmen(20), an dessen vorderem Bereich auf der einen Seite eine sich nach vorn erstreckende Zugstange (30) starr befestigt ist, die mit einer in senkrechter Richtung verstellbaren Zugvorrichtung (34,58) verbunden ist, welche ihrerseits an dem Ackerschlepper (36) abstützbar ist, und an der anderen Seite ein Furchenlaufrad (42) angeordnet ist und mit dem Hauptrahmen (20) über ein Stützgestänge (44) so verbunden ist, daß dieses Ende gegenüber dem Furchenlaufrad (42) selektiv mittels eines hydraulischen Schubkolbenmotors (100) angehoben oder abgesenkt werden kann, wobei eine Einrichtung vorgesehen ist, um die verstellbare Zugvorrichtung (34,58) und das verstellbare Stützgestänge (44) im wesentlichen als Einheit so zu verstellen, daß der Hauptrahmen (20) bei der Verstellung seine ausgerichtete Lage beibehält, dadurch g e k e n n z e i c h n e t , daß die Einrichtung neben dem doppelt wirkenden hydraulischen Schubkolbenmotor (100) zur Verstellung des Furchenlaufrades (42) einen doppelt wirkenden hydraulischen Schubkolbenmotor (60) aufweist, dessen Zylinder (62) mit der Zugstange (30) und dessen Kolbenstange (66) mit der verstellbaren Zugvorrichtung (34,58) verbunden ist, und daß die beiden Schubkolbenmotoren (60,100) arbeitsmäßig in Reihe geschaltet sind und der Schubkolbenmotor (60) wenigstens für den der verstellbaren Zugvorrichtung (34,48) einen Gleichlaufsteueranschluß (138) in Ausfahrrichtung der Kolbenstange (66) des Schubkolbenmotors (60) vor dem Hauptanschluß (136) aufweist, derart, daß der zugehörige Kolben (64) bei Erreichen des Endes seiner Ausfahrbewegung zunächst diesen Gleichlaufsteueranschluß (138) abdeckt und danach wieder

2

freigibt, und daß die verstellbare Zugvorrichtung (34,58) außerhalb des zugehörigen Schubkolbenmotors (60) eine Rückführungseinrichtung (78,80,156) aufweist, welche bei der Einfahrbewegung des Kolbens (64) diesen zur Abdeckung des Gleichlaufsteueranschlusses im begrenzten Maße zurückfährt.

2. Pflug nach Anspruch 1, dadurch g e k e n n - z e i c h n e t , daß die Kolbenstange (66) des Schubkolbenmotors (60) mit der verstellbaren Zugvorrichtung (34,58) über eine Kraftübertragungseinrichtung (70) verbunden ist, welche aufragende Halter (74 bzw.82) an der Zugstange (30) bzw. an der Zugvorrichtung (34,58), einen an dem Halter (74) der Zugstange (30) schwenkbaren Arm (78), ein an dem Arm (78) und an dem Halter (82) der Zugvorrichtung (34,58) angelenktes Kraftübertragungsglied (84) sowie eine Verbindungseinrichtung (80) zwischen dem Arm (78) und der Kolbenstange (66) umfaßt, wobei diese Verbindungseinrichtung eine begrenzte Leerwegeinrichtung ( 152,78) aufweist, und an dem Halter (74) der Zugstange (30) ein Anschlag (156) vorgesehen ist, der an dem Arm (78) zur Begrenzung dessen Schwenkbewegung angreift, wenn die Kolbenstange (66) ihre Ausfahr-Endstellung erreicht, wobei der Arm (78), der Anschlag (156) und die Leerwegverbindung die Rückführungseinrichtung bilden.

3. Pflug nach Anspruch 2, dadurch g e k e n n - z e i c h n e t , daß das Kraftübertragungsglied (84) in seiner wirksamen Länge einstellbar ist.

4. Pflug nach Anspruch 1, dadurch g e k e n n z e i c h - n e t , daß die verstellbare Zugvorrichtung (34,58) ein starres Glied (34) aufweist, dessen vorderes Ende über eine Querachse (54) am Ackerschlepper (36) abgestützt ist, während sein rückwärtiges Ende über einen Querzapfen (58) mit der Zugstange (30) verbunden ist und daß der Zylinder (62) des zugeordneten Schubkolbenmotors (60) mit der Zugstange (30) an einer Stelle rückwärts von dem Querzapfen (58) verbunden ist, während die Kolbenstange (66) an dem starren Glied (34) wirksam an einer Stelle (86) vor dem Schwenkzapfen (58) angreift, derart, daß bei Ausfahren der Kolbenstange (66) der Schwenkzapfen (58) angehoben und beim Einfahren abgesenkt wird.

5. Pflug nach Anspruch 4, dadurch g e k e n n z e i c h - n e t , daß das starre Glied (34) vor dem Querzapfen (58) einen vorderen starren aufragenden Halter (82) aufweist, mit dem die Kolbenstange (66) über eine Kraftübertragungseinrichtung (70,80) verbunden ist.

6. Pflug nach Anspruch 5, dadurch g e k e n n z e i c h - n e t , daß die Zugstange (73) einen rückwärtigen starren aufragenden Halter (74) hinter dem Querzapfen (58) und vor der Verbindungsstelle (68) zwischen dem Zylinder (62)und der Zugstange (30) aufweist, daß die Kraftübertragungseinrichtung (70,80) einen mit seinem oberen Ende um eine Querachse (76) am hinteren Halter (74) schwenkbar gelagerten Arm (78) und ein Kraftübertragungsglied (84) aufweist, das an einem mittleren Bereich des Armes (78) und an dem vorderen Halter (82) angelenkt ist.

7. Pflug nach Anspruch 6, dadurch g e k e n n - z e i c h n e t, daß der rückwärtige Halter (74) einen Anschlag (156) aufweist, der in einer vorbestimmten vorderen Schwenkstellung des Armes (78) an diesem angreift, und daß die Verbindungseinrichtung (80) zwischen dem Arm (78) und der Kolbenstange (66) einen in der vorderen Schwenkstellung des Armes (78) nach rückwärts und aufwärts geneigten Schlitz (150) in dem Arm (78) und einen in diesen gleitenden Zapfen (152) am vorderen Ende der Kolbenstange (66) aufweist, derart, daß der Schlitz (150) und der Zapfen (152) eine Leerwegverbindung nur in der vorderen Endstellung des Armes (78) bildet.

FIG. I

0145027

FIG. 2

FIG. 3

FIG. 4

FIG. 5

FIG. 6

*132*

*7a*      *7a*

*136*

*138*

*60*

*62*

*66*

*64*

*138* — *136*

FIG. 7

FIG. 8

*130*

*66*

*136*

*138*

*132*

*64*    *62*    *60*

*102*    *100*    *104*

*106*

*140*    *142*

*134*

V    P

S